# FASCICULE DE BREVET EUROPEEN

(11) **EP 2 113 447 B1**
(45) Date de publication et mention de la délivrance du brevet: **27.10.2010**
(21) Numéro de dépôt: 09155714.0
(22) Date de dépôt: 20.03.2009
(51) Int. Cl.: B62D 25/08, B62D 25/14, B62D 29/00

(54) **Structure de véhicule automobile, son procédé de fabrication, et véhicule comportant une telle structure**
Kraftfahrzeugstruktur, ihr Herstellungsverfahren und Fahrzeug, das eine solche Struktur umfasst
Automobile structure, method for manufacturing same, and vehicle comprising such a structure

(30) Priorité: 29.04.2008 FR 0852871
(43) Date de publication de la demande: 04.11.2009
(73) Titulaire: Peugeot Citroën Automobiles SA, 78140 Vélizy-Villacoublay (FR)
(72) Inventeur: Gavillon, Paul, 25490, DAMPIERRE LES BOIS (FR); Varlot, Damien, 90500, BEAUCOURT (FR)

(56) Documents cités:
- FR-A- 2 874 577
- FR-A- 2 878 809
- US-A1- 2003 057 737

## Description

La présente invention concerne une structure de véhicule automobile, plus particulièrement une traverse destinée au support du pare-brise du véhicule, un véhicule comportant une telle structure ainsi que son procédé de fabrication.

L'invention concerne plus particulièrement une structure de véhicule automobile comportant une traverse supportant un pare-brise, ladite traverse comprenant un élément supérieur fixé à au moins un élément inférieur, de manière à former tout ou partie des parois délimitant un caisson, par l'intermédiaire d'au moins une cloison comportant en périphérie des moyens de fixation.

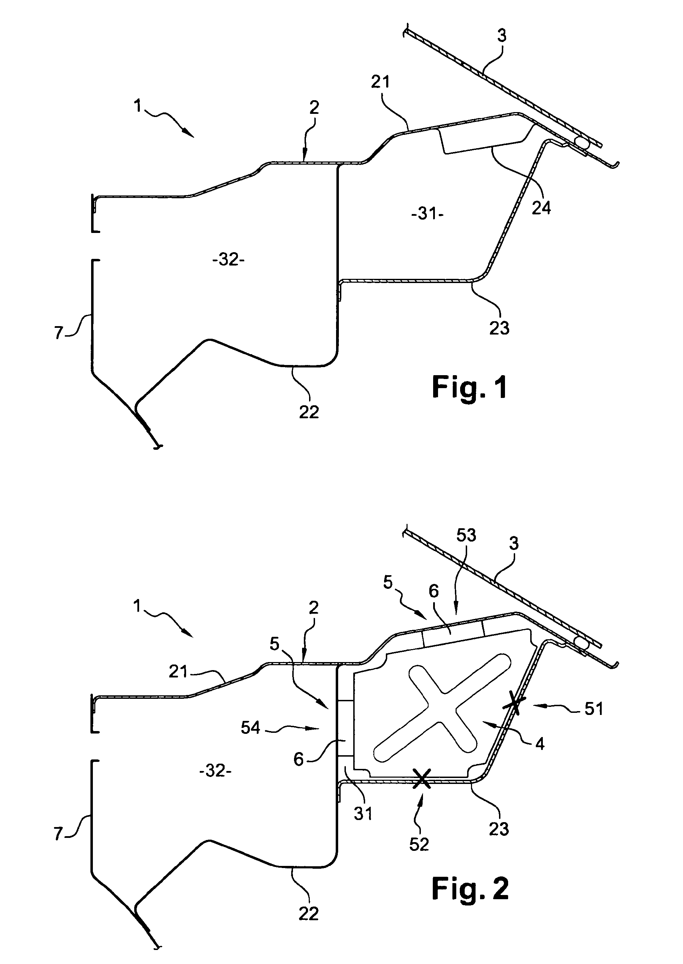

Une structure de véhicule automobile comporte en général un ensemble de pièces destinées au support du pare-brise. Un tel ensemble de pièces est illustré à la figure 1, sur laquelle est représentée une traverse 2 inférieure de baie, qui est montée solidaire à un tablier 7 de séparation entre l'habitacle et le compartiment moteur. Il est connu d'augmenter le volume dévolu à l'habitacle d'un véhicule en positionnant par exemple la base du pare-brise 3, le plus en avant, c'est-à-dire au dessus d'une partie du compartiment moteur. Pour rendre cela possible, la traverse 2 inférieure de baie est de dimension plus importante que celle utilisée dans un véhicule traditionnel où la base du pare-brise est alors disposée longitudinalement proche du tablier. En éloignant de la sorte la zone de liaison entre le pare-brise 3 et le tablier 7, on affaiblit la rigidité de la traverse 2 inférieure, ce qui nécessite l'ajout d'une doublure de traverse 22 inférieure de baie prolongée vers l'avant par une doublure centrale 23.

C'est ainsi que la doublure de traverse 22 inférieure de baie lie la partie médiane de la traverse 21 supérieure de baie au tablier, formant de la sorte un premier caisson 32, et que la doublure centrale 23 lie la doublure de traverse 22 inférieure de baie à une partie d'extrémité avant de la traverse inférieure 21 de baie supportant le pare-brise, formant de la sorte un second caisson 31 jouxtant ledit premier caisson 32, ces derniers formant un conduit aéraulique au travers duquel l'air de l'extérieur peut circuler afin d'alimenter un boîtier de climatisation disposé à proximité immédiate du tablier, par exemple dans l'habitacle.

Malgré la présence de la doublure de traverse inférieure 22 de baie et de la doublure centrale 23, le fonctionnement normal du véhicule génère des vibrations au niveau de l'extrémité avant de la traverse inférieure 21 de baie, ce qui créé des vibrations du pare-brise transformées en bruit dans l'habitacle du véhicule.

Pour remédier à cet inconvénient, il est connu d'ajouter une doublure avant 24 de traverse inférieure de baie dans le second caisson 31, directement en liaison avec la traverse inférieure 21 de baie, au niveau de l'extrémité avant support la base du pare-brise 3.

Cette solution n'est néanmoins pas satisfaisante étant donné que l'avancée de la base du pare-brise vers l'avant engendre une augmentation significative de la dimension de la traverse inférieure de baie, ce qui impacte directement la taille de la doublure avant de cette dernière, et par voie de conséquence le poids de la traverse, ainsi que la consommation du véhicule.

Une solution connue du brevet FR2878809 divulguant la structure du préambule de la revendication 1 consiste à remplacer la doublure avant de traverse inférieure de baie par des cloisons, nommées aussi couples, qui ont une section qui coïncide avec celle du caisson dans lequel les cloisons sont disposées. La périphérie de chaque cloison est fixée au caisson par l'intermédiaire d'un joint intumescent à la chaleur, adhésif et placé en périphérie de la cloison.

La Demanderesse a relevé que cette solution n'est pas gage de qualité dans la liaison entre la cloison et les parois du caisson, en particulier parce que le collage du joint intumescent en périphérie de la cloison par adhésif ne résiste pas au déplacement relatif des éléments formant la traverse, durant leur phase d'assemblage.

La Demanderesse a aussi relevé que le recours à un joint intumescent comme seul moyen de liaison de la cloison au caisson nécessite l'ajout d'un moyen d'assemblage temporaire de la cloison à l'intérieure du caisson de la traverse, avant que le joint intumescent soit soumis à une température réalisant la liaison définitive avec les éléments formant la traverse.

La Demanderesse a également constaté qu'au vu du niveau de rigidité recherché, le recours à un joint intumescent comme seul moyen de liaison de la cloison au caisson nécessite une disposition du joint sur quasi toute la périphérie de la cloison, du moins sur les trois quart de celle-ci, ce qui reste une solution couteuse à mettre en oeuvre, vu le prix actuellement élevé des joints intumescents.

Un but de la présente invention est de pallier tout ou partie des inconvénients de l'art antérieur relevés ci-dessus.

A cette fin, la structure de véhicule selon l'invention, par ailleurs conforme à la définition générique qu'en donne le préambule ci-dessus, est essentiellement caractérisé en ce que ledit moyen de fixation comprend au moins une liaison réalisée par soudage, entre la cloison et au moins un des éléments supérieur et inférieur, et au moins une liaison réalisée par un joint intumescent entre au moins un autre des éléments supérieur et inférieur et ladite cloison.

Par ailleurs, la structure de véhicule de l'invention peut comporter l'une ou plusieurs des caractéristiques suivantes :
- la traverse comprend un premier élément inférieur et un second élément inférieur, de sorte que l'élément supérieur fixé audit second élément inférieur délimitent un caisson avant,
- la structure comprend un élément de séparation de l'habitacle et du compartiment moteur, délimitant un caisson arrière avec l'élément supérieur et ledit premier élément inférieur,
- la cloison coïncide avec la section du premier caisson et comprend plusieurs bords périphériques aptes à être liés aux éléments supérieur et inférieur de la traverse par l'intermédiaire de pattes obtenues par pliage de la cloison,
- la cloison comprend au moins un moyen de guidage et de maintien du joint intumescent sur au moins l'une des pattes,
- la cloison comprend au moins une griffe déformable permettant de verrouiller le joint sur la cloison,
- ledit moyen de guidage et de maintien comprend au moins un premier ergot formant butée au déplacement transversal du joint intumescent, au moins un second ergot d'orientation sensiblement perpendiculaire audit premier ergot, formant butée au coulissement du joint sur la cloison, ainsi qu'au moins une nervure s'étendant en tout ou partie d'une extrémité libre de la patte comprenant une face orientée au droit de tout ou partie dudit premier ergot,
- chacun desdits premier et second ergots est obtenu par découpe et pliage de la patte de la cloison.

L'invention a aussi trait à un procédé de fabrication d'une structure de véhicule automobile comportant l'une quelconque des caractéristiques susmentionnées, caractérisé en ce qu'il comprend une étape de soudage de la cloison sur au moins un des éléments inférieurs ou supérieur de la traverse, une étape de positionnement de l'élément inférieur par rapport à l'élément supérieur, et une étape de mise en température du joint intumescent permettant de lier définitivement la cloison à l'élément supérieur ou à au moins un des éléments inférieurs de la traverse.

Par ailleurs, le procédé comprend une étape selon laquelle chaque joint intumescent est monté puis verrouillé sur la cloison préalablement à l'étape de soudage de la cloison sur au moins un des éléments inférieurs ou supérieur de la traverse.

L'invention concerne aussi un véhicule automobile comportant une structure formant support d'un pare-brise, caractérisé en ce que la structure est conforme à l'une quelconque des caractéristiques précédemment citées.

D'autres avantages et particularités de l'invention ressortent de la description de modes de réalisation faite ci-après en référence aux dessins annexés dans lesquels :
- la figure 2 est une vue en coupe longitudinale d'une structure de véhicule automobile comportant un élément de rigidification selon l'invention,
- la figure 3 est une vue en perspective représentant la cloison de la figure 2,
- la figure 4 est un agrandissement d'un bord de la cloison de la figure 3 représentant l'agencement particulier d'un moyen de fixation sur la cloison,
- la figure 5 est une vue en perspective de la cloison assemblée sur un des éléments constitutifs de la traverse de baie.

Dans ce qui suit, les termes « intérieur » et « extérieur » s'étendent par la position relative d'une pièce par rapport à une autre pièce. Les termes « avant » et « arrière » s'étendent par rapport au sens de fonctionnement normal du véhicule.

En se reportant à la figure 2, il a été représenté la partie avant d'une structure 1 de véhicule automobile du type comportant un pare-brise 3 qui est, par rapport à la position d'un tablier 7 de séparation entre l'habitacle et le compartiment moteur, suffisamment éloigné pour nécessiter l'ajout de deux éléments inférieurs participant à l'amélioration de la tenue d'un élément supérieur 21 supportant directement le pare-brise.

Chacun des éléments inférieurs 22, 23 est directement lié à l'élément supérieur 21 afin d'en augmenter sa rigidité. Toutefois, comme celle-ci n'est pas suffisante, notamment parce que l'extrémité avant de l'élément supérieur est éloignée du tablier 7 d'une distance D comprise entre 25 et 40 cm, la structure de véhicule automobile comprend une cloison 4 verticale, s'étendant de façon sensiblement perpendiculaire au tablier 7, à l'intérieur de la traverse 2, de préférence selon une disposition à l'intérieur de cette dernière.

Par la suite, l'élément supérieur 21 est une traverse inférieure de baie qui s'étend transversalement au véhicule selon une position sensiblement perpendiculaire au tablier 7, de sorte qu'elle comprend une extrémité arrière directement fixé au tablier, et une extrémité avant sur laquelle est fixé par collage le pare-brise 3 du véhicule. Les éléments inférieurs 22 et 23 sont respectivement une doublure de traverse inférieure de baie et une doublure centrale, la doublure de traverse 22 inférieure de baie est située derrière la doublure centrale 23 de sorte que l'agencement particulier de ces pièces entre elles définit un caisson avant 31 et un caisson arrière 32, jouxtant le caisson 31.

C'est ainsi que la traverse 2 liant la base du pare-brise 3 au soubassement par l'intermédiaire du tablier 7, est constitué par deux caissons 31 et 32 solidaires entre eux et délimités par un assemblage particulier des éléments 21, 22, et 23.

Selon un mode de réalisation préféré, la cloison 4 est située au niveau de la partie médiane de la traverse et est obtenue à partir d'une pièce de tôle en acier, et réalisée par découpage et emboutissage de cette dernière.

De préférence, l'acier utilisé à la fabrication de la cloison 4 est du type ES et d'épaisseur comprise entre 0,7 et 1,2 mm. Il s'agit en fait d'une pièce de renfort, qui comprend en son centre deux rainures croisées, destinées à augmenter encore plus la résistance à la déformation de la cloison. Chaque rainure de rigidification est mise en forme durant l'opération d'emboutissage.

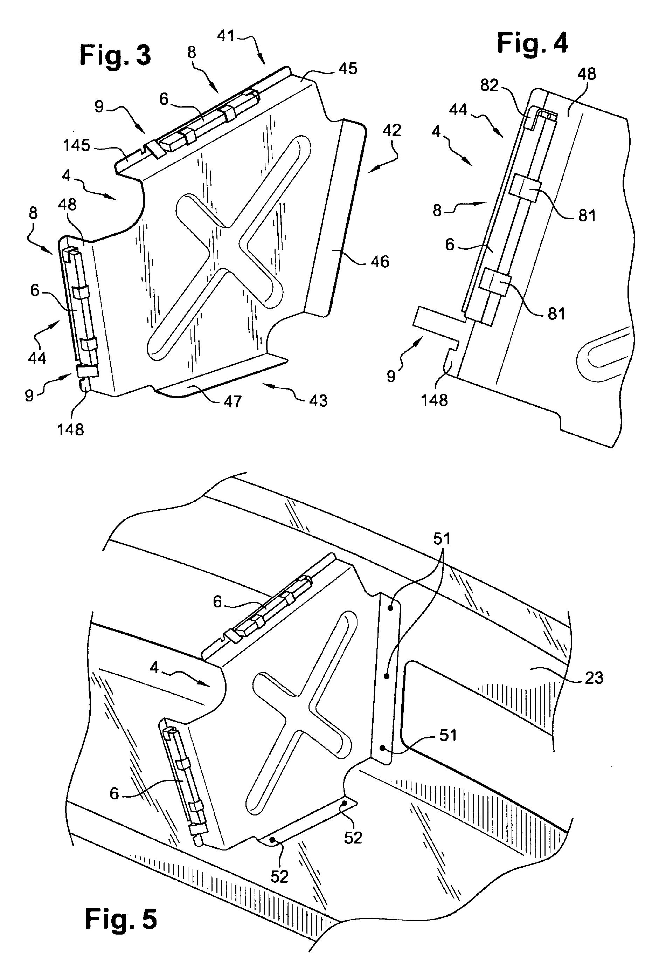

Pour faciliter le montage de la cloison 4, cette dernière comprend des bords qui coïncident avec la section du caisson avant 31. A titre d'exemple, tel qu'illustré par les figures 2 à 5, la cloison 4 comprend un bord supérieur 41 de liaison à la traverse inférieur 21, de bords avant 42 et inférieur 43 de liaison à la doublure centrale 23, et un bord arrière 44 de liaison à la doublure 22 de la traverse. Chacun des bords 41, 42, 43 et 44 est réalisé par pliage à 90° par rapport au plan général de la cloison 4 afin de créer des pattes de liaison 45, 46, 47 et 48 de la cloison aux éléments délimitant le caisson avant à l'intérieur duquel est disposé la cloison. Les bords sont soit repliés d'un côté de la cloison, soit d'un côté opposé, voire des deux côtés par symétrie ou par couple, comme cela est représenté à la figure 5.

La cloison 4 est disposée à l'intérieur du caisson avant 31 et est reliée à la traverse inférieure 21 de baie par un premier type de liaison, à la doublure centrale 23 par un second type de liaison. Le premier type de liaison comprend un joint 6 intumescent, tandis que le second type de liaison comprend au moins une soudure 51,52.

De préférence, la liaison entre la cloison 4 et la doublure centrale 23 s'effectue par des points de soudures électriques. Une telle liaison est avantageusement simple à mettre en oeuvre et peu couteuse. De préférence, comme cela est représenté en figure 5, deux bords 46, 47 contigus sont reliés à la doublure centrale 23 au moyen de points de soudure électrique. A titre d'exemple, trois points 51 solidarise le bord avant 46 de la cloison 4 à la paroi inclinée de la doublure centrale, tandis que deux points 52 de soudure électrique solidarise le bord 47 de la cloison à la paroi horizontale de la doublure 23.

La liaison entre la cloison 4 et la traverse inférieure 22, tout comme celle entre la cloison 4 et la doublure 23 de la traverse inférieure, s'effectue par l'intermédiaire d'une bande de joint 6 intumescent. L'assemblage des éléments 21, 6 et 23 s'effectue par superposition des éléments entre eux, de sorte que le joint 6 est disposé entre la traverse inférieure 21 et la doublure centrale 23. L'assemblage des éléments 22, 6 et 23 s'effectue de la même manière, de sorte que le joint 6 est disposé entre la doublure 22 de la traverse inférieure et la doublure centrale 23.

Chaque bande de joint 6 est de forme sensiblement complémentaire à celle d'un moyen 8 de guidage et de maintien dans lequel chaque bande est destinée à être montée.

En référence aux figures 3 et 4, l'un des moyens 8 de guidage et de maintien d'un joint 6 sur la cloison 4 va à présent être décrit.

Ledit moyen 8 de guidage et de maintien est de préférence venu de matière de la cloison 4 par le bais d'opérations de découpe et de pliage.

Chaque moyen 8 de guidage et de maintien est disposé sur l'un des bords 45, 48 périphériques de la cloison 4 recevant le joint 6 intumescent, chacun des bords s'étendant au droit soit de la traverse inférieure 31 de baie, soit de la doublure 22 de traverse inférieure.

Le moyen 8 de guidage et de maintien situé sur le bord 48 arrière est identique à celui du bord 45 supérieur, et comprend deux premiers ergots 81 formant respectivement une butée au déplacement transversal du joint 6 intumescent, selon une première direction, ainsi qu'un second ergot 82 formant une butée au déplacement par coulissement du joint 6 sur la cloison 4, lors du montage du joint 6 sur la cloison. Ledit moyen 8 de guidage et de maintien comprend également une nervure 145, 148 formant une butée au déplacement transversal du joint 6 intumescent, selon une seconde direction opposée à la première direction. Chaque nervure 145, 148, obtenue par pliage de l'extrémité libre de chaque bord 45, 48, s'étendant intégralement le long du bord 45, 48, conférant par la même une rigidité accrue qui vise à s'opposer à toute vibration d'un bord lors du fonctionnement du véhicule.

De préférence les premiers ergots 81 sont orientés de façon sensiblement perpendiculaire à chaque second ergot 82. La barre de joint 6 est de forme générale sensiblement rectangulaire et de forme sensiblement biseautée en chacune de ses extrémités, afin d'en faciliter le montage dans chacun desdits moyens 8 de guidage et de maintien.

En référence aux figures 3 et 4, le moyen de verrouillage 9 du joint 6 sur la cloison 4 va à présent être décrit.

Il comprend de préférence une griffe 9 déformable entre une position initiale de libération du joint 6, donnée en figure 4, et une position finale de verrouillage du joint 6 sur la cloison 4, donnée en figure 3.

La griffe 9 est de préférence venue de matière de la cloison 4 par le bais d'opérations de découpe et de pliage de la tôle utilisée à la fabrication de la cloison.

Dans la position de verrouillage, l'extrémité libre de la griffe 9 est rapportée contre le bord 45, 48 de la cloison 4.

Le recours à de tels moyens de guidage et de maintien 8 et de verrouillage 9 du joint 6 sur la cloison 4 permet mise en place de chaque joint 6 par une opération de montage soit automatisé, soit manuelle.

Dans ce qui suit va être décrit le procédé de fabrication d'une structure de véhicule automobile comprenant les caractéristiques décrites ci-dessus.

Le procédé comprend de préférence une étape de montage et de verrouillage du joint 6 intumescent sur la cloison 4, suivi d'une étape de soudage de la cloison 4 sur la doublure centrale 23 par la réalisation de plusieurs points de soudure électrique 51, 52 sur chacun des bords 46, 47 coopérant avec la section de la doublure 23.

Le procédé de fabrication comprend ensuite une étape de positionnement de la doublure 22 de traverse inférieure de baie sur la doublure centrale 21, suivie d'une étape d'assemblage par points de soudure électrique, à la fois des doublures 22 et 23, ainsi que de la doublure 22 et du tablier 7 . Dès lors, le joint 6 destiné à créer la liaison 54 est disposé entre la cloison 4 et la doublure 22 de traverse.

Le procédé de fabrication comprend ensuite une étape de positionnement de la traverse inférieure 21 de baie, en concomitance sur la doublure 22 de la traverse et sur la doublure centrale 23, suivie d'une étape d'assemblage par points de soudure électrique, à la fois de l'arrière de la traverse 21 au tablier 7, ainsi que de l'avant de la traverse 21 à la doublure centrale 23. Dès lors, chaque joint 6 destiné à créer la liaison 53 ou 54 est disposé à l'intérieur du caisson avant 31, respectivement entre la cloison 4 et la traverse 21 et entre la cloison 4 et la doublure 22 de traverse.

L'assemblage définitif de la cloison 4 sur la traverse 2 est réalisée par une mise en température de la traverse, laquelle a lieu habituellement par un passage de la structure du véhicule dans une cataphorèse.

Sans sortir du cadre de l'invention, les moyens de liaison 51 et 52 peuvent être remplacés par les moyens de liaison 53 et 54. Dans ce cas, le procédé diffère de ce qui précède par le fait que la doublure centrale 23 est rapportée après que la cloison 4 ait été soudée à la traverse 21 et à la doublure 22 de la traverse.

## Revendications

1. Structure (1) de véhicule automobile comportant une traverse (2) destinée au support d'un pare-brise (3) et comprenant un élément supérieur (21) fixé à au moins un élément inférieur (22, 23), de manière à former tout ou partie des parois délimitant un caisson (31, 32), par l'intermédiaire d'au moins une cloison (4) comportant en périphérie des moyens (5) de fixation, **caractérisée en ce que** ledit moyen (5) de fixation comprend au moins une liaison réalisée par soudage (51, 52), entre la cloison (4) et au moins un des éléments supérieur et inférieur (21, 22, 23), et une liaison (53, 54) réalisée par un joint intumescent (6), entre au moins un autre des éléments supérieur et inférieur (21, 22, 23) et ladite cloison (4).

2. Structure selon la revendication 1, **caractérisée en ce que** la traverse (2) comprend un premier élément inférieur (22) et un second élément inférieur (23), de sorte que l'élément supérieur (21) fixé audit second élément inférieur (23) délimitent un caisson avant (31).

3. Structure selon la revendication 1 ou 2, **caractérisée en ce qu'**elle comprend un élément (7) de séparation de l'habitacle et du compartiment moteur, délimitant un caisson arrière (32) avec l'élément supérieur (21) et ledit premier élément inférieur (22).

4. Structure selon l'une quelconque des revendications 1 à 3, **caractérisée en ce que** la cloison (4) coïncide avec la section du premier caisson (31) et comprend plusieurs bords périphériques (41, 42, 43, 44) aptes à être liés aux éléments supérieur et inférieur (21, 22, 23) de la traverse par l'intermédiaire de pattes (45, 46, 47, 48) obtenues par pliage de la cloison.

5. Structure selon l'une quelconque des revendications 1 à 4, **caractérisée en ce que** la cloison (4) comprend au moins un moyen (8) de guidage et de maintien du joint intumescent (6) sur au moins l'une des pattes (45, 48).

6. Structure selon l'une quelconque des revendications 1 à 5, **caractérisée en ce que** la cloison (4) comprend au moins une griffe (9) déformable permettant de verrouiller le joint (6) sur la cloison.

7. Structure selon la revendication 5, **caractérisée en ce que** ledit moyen (8) de guidage et de maintien comprend au moins un premier ergot (81) formant butée au déplacement transversal du joint (6) intumescent, au moins un second ergot (82) d'orientation sensiblement perpendiculaire audit premier ergot (81), formant butée au coulissement du joint (6) sur la cloison (4), ainsi qu'au moins une nervure (145, 148) s'étendant en tout ou partie d'une extrémité libre de la patte (45, 48) comprenant une face orientée au droit de tout ou partie dudit premier ergot (81).

8. Structure selon l'une quelconque des revendications 1 à 3, **caractérisée en ce que** chacun desdits premier et second ergots (81, 82) est obtenu par découpe et pliage de la patte (45, 48) de la cloison (4).

9. Procédé de fabrication d'une structure de véhicule automobile conforme à l'une quelconque des revendications précédentes, **caractérisé en ce qu'**il comprend une étape de soudage de la cloison (4) sur au moins un des éléments inférieurs (22, 23) ou supérieur (21) de la traverse (2), une étape de positionnement de l'élément inférieur (22, 23) par rapport à l'élément supérieur (21), et une étape de mise en température du joint (6) intumescent permettant de lier définitivement la cloison (4) à l'élément supérieur (21) ou à au moins un des éléments inférieurs (22, 23) de la traverse.

10. Procédé de fabrication selon la revendication 9, **caractérisé en ce que** chaque joint (6) intumescent est monté puis verrouillé sur la cloison (4) préalablement à l'étape de soudage de la cloison sur au moins un des éléments inférieurs (22, 23) ou supérieur (21) de la traverse.

11. Véhicule automobile comportant une structure (1) formant support d'un pare-brise (3), **caractérisé en ce que** la structure (1) est conforme à l'une quelconque des revendications 1 à 8.

## Claims

1. Motor vehicle structure (1) having a cross member (2) intended to support a windscreen (3) and comprising an upper element (21) fixed to at least one lower element (22, 23), so as to form all or some of the walls delimiting a box structure (31, 32), by way of at least one partition (4) having fixing means (5) at its periphery, **characterized in that** said fixing means (5) comprises at least one link, produced by welding (51, 52), between the partition (4) and at least one of the upper and lower elements (21, 22, 23), and a link (53, 54), produced by an intumescent seal (6), between at least one other of the upper and lower elements (21, 22, 23) and said partition (4).

2. Structure according to Claim 1, **characterized in that** the cross member (2) comprises a first lower element (22) and a second lower element (23), such that the upper element (21) fixed to said second lower element (23) delimits a front box structure (31).

3. Structure according to Claim 1 or 2, **characterized in that** it comprises an element (7) separating the passenger compartment from the engine compartment and delimiting a rear box structure (32) with the upper element (21) and said first lower element (22).

4. Structure according to any one of Claims 1 to 3, **characterized in that** the partition (4) coincides with the section of the first box structure (31) and comprises a plurality of peripheral edges (41, 42, 43, 44) able to be connected to the upper and lower elements (21, 22, 23) of the cross member by way of tabs (45, 46, 47, 48) obtained by folding the partition.

5. Structure according to any one of Claims 1 to 4, **characterized in that** the partition (4) comprises at least one means (8) for guiding and holding the intumescent seal (6) on at least one of the tabs (45, 48).

6. Structure according to any one of Claims 1 to 5, **characterized in that** the partition (4) comprises at least one deformable claw (9) for locking the seal (6) on the partition.

7. Structure according to Claim 5, **characterized in that** said guiding and holding means (8) comprises at least one first protrusion (81) that forms a stop preventing transverse movement of the intumescent seal (6), at least one second protrusion (82) oriented approximately perpendicularly to said first protrusion (81) and forming a stop preventing the seal (6) sliding on the partition (4), and at least one rib (145, 148) extending wholly or partly from a free end of the tab (45, 48) comprising a face oriented in line with all or some of said first protrusion (81).

8. Structure according to any one of Claims 1 to 3, **characterized in that** each of said first and second protrusions (81, 82) is obtained by cutting and folding the tab (45, 48) of the partition (4).

9. Method of manufacturing a motor vehicle structure in accordance with any one of the preceding claims, **characterized in that** it comprises a step of welding the partition (4) on at least one of the lower elements (22, 23) or upper element (21) of the cross member (2), a step of positioning the lower element (22, 23) with respect to the upper element (21), and a step of heating up the intumescent seal (6) enabling the partition (4) to be permanently connected to the upper element (21) or to at least one of the lower elements (22, 23) of the cross member.

10. Manufacturing method according to Claim 9, **characterized in that** each intumescent seal (6) is mounted and then locked on the partition (4) before the step of welding the partition on at least one of the lower elements (22, 23) or upper element (21) of the cross member.

11. Motor vehicle having a structure (1) forming a support for a windscreen (3), **characterized in that** the structure (1) is in accordance with any one of Claims 1 to 8.

## Patentansprüche

1. Kraftfahrzeugstruktur (1) mit einem Querträger (2), der dazu bestimmt ist, eine Windschutzscheibe (3) zu stützen, und ein oberes Element (21) umfasst, das an mindestens einem unteren Element (22, 23) befestigt ist, so dass alle oder ein Teil der ein Gehäuse (31, 32) begrenzenden Wände gebildet werden, mittels mindestens einer Trennwand (4), die am Umfang Befestigungsmittel (5) umfasst, **dadurch gekennzeichnet, dass** das Befestigungsmittel (5) mindestens eine Schweißverbindung (51, 52) zwischen der Trennwand (4) und mindestens einem der oberen und unteren Elemente (21, 22, 23) und eine durch eine intumeszierende Dichtung (6) ausgeführte Verbindung (53, 54) zwischen mindestens einem anderen der oberen und unteren Elemente (21, 22, 23) und der Trennwand (4) umfasst.

2. Struktur nach Anspruch 1, **dadurch gekennzeichnet, dass** der Querträger (2) ein erstes unteres Element (22) und ein zweites unteres Element (23) umfasst, so dass das am zweiten unteren Element (23) befestigte obere Element (21) ein vorderes Gehäuse (31) begrenzt.

3. Struktur nach Anspruch 1 oder 2, **dadurch gekennzeichnet, dass** sie ein Element (7) zum Trennen des Fahrgastraums vom Motorraum umfasst, das ein hinteres Gehäuse (32) mit dem oberen Element (21) und dem ersten unteren Element (22) begrenzt.

4. Struktur nach einem der Ansprüche 1 bis 3, **dadurch gekennzeichnet, dass** die Trennwand (4) mit dem Querschnitt des ersten Gehäuses (31) zusammenfällt und mehrere Umfangsränder (41, 42, 43, 44) umfasst, die geeignet sind, über Laschen (45, 46, 47, 48), die durch Biegen der Trennwand erhalten werden, mit den oberen und unteren Elementen (21, 22, 23) des Querträgers verbunden zu werden.

5. Struktur nach einem der Ansprüche 1 bis 4, **dadurch gekennzeichnet, dass** die Trennwand (4) mindestens ein Mittel (8) zum Führen und Halten der intumeszierenden Dichtung (6) an mindestens einer der Laschen (45, 48) umfasst.

6. Struktur nach einem der Ansprüche 1 bis 5, **dadurch gekennzeichnet, dass** die Trennwand (4) mindestens eine deformierbare Pratze (9) umfasst, mit der die Dichtung (6) an der Trennwand verriegelt werden kann.

7. Struktur nach Anspruch 5, **dadurch gekennzeichnet, dass** das Führungs- und Haltemittel (8) mindestens einen ersten Zapfen (81), der einen Anschlag für die Querverschiebung der intumeszierenden Dichtung (6) bildet, mindestens einen zweiten Zapfen (82) mit einer im Wesentlichen senkrechten Ausrichtung zum ersten Zapfen (81), der einen Anschlag für das Gleiten der Dichtung (6) an der Trennwand (4) bildet, und mindestens eine Rippe (145, 148) umfasst, die sich vollkommen oder zum Teil von einem freien Ende der Lasche (45, 48) erstreckt und eine Fläche umfasst, die rechtwinklig zum ganzen ersten Zapfen (81) oder einem Teil davon ausgerichtet ist.

8. Struktur nach einem der Ansprüche 1 bis 3, **dadurch gekennzeichnet, dass** der erste und der zweite Zapfen (81, 82) jeweils durch Abschneiden und Biegen der Lasche (45, 48) der Trennwand (4) erhalten wird.

9. Verfahren zur Herstellung einer Kraftfahrzeugstruktur nach einem der vorhergehenden Ansprüche, **dadurch gekennzeichnet, dass** es einen Schritt des Schweißens der Trennwand (4) an mindestens eines der unteren (22, 23) oder oberen (21) Elemente des Querträgers (2), einen Schritt des Positionierens des unteren Elements (22, 23) bezüglich des oberen Elements (21) und einen Schritt des Erhitzens der intumeszierenden Dichtung (6) umfasst, so dass die Trennwand (4) permanent mit dem oberen Element (21) oder mit mindestens einem der unteren Elemente (22, 23) des Querträgers verbunden werden kann.

10. Herstellungsverfahren nach Anspruch 9, **dadurch gekennzeichnet, dass** jede intumeszierende Dichtung (6) vor dem Schritt des Schweißens der Trennwand an mindestens eines der unteren (22, 23) oder oberen (21) Elemente des Querträgers montiert und dann an der Trennwand (4) verriegelt wird.

11. Kraftfahrzeug mit einer Struktur (1), die die Stütze einer Windschutzscheibe (3) bildet, **dadurch gekennzeichnet, dass** die Struktur (1) einem der Ansprüche 1 bis 8 entspricht.
